(19) Europäisches Patentamt
European Patent Office
Office européen des brevets

(11) EP 4 024 283 A1

(12) EUROPEAN PATENT APPLICATION
published in accordance with Art. 153(4) EPC

(43) Date of publication:
06.07.2022  Bulletin 2022/27

(51) International Patent Classification (IPC):
G06N 3/04 (2006.01)

(21) Application number: 20858900.2

(52) Cooperative Patent Classification (CPC):
G06N 3/063; G06N 3/04; G06N 3/084

(22) Date of filing: 21.05.2020

(86) International application number:
PCT/CN2020/091578

(87) International publication number:
WO 2021/036362 (04.03.2021 Gazette 2021/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.08.2019  CN 201910804627

(71) Applicant: Shanghai Cambricon Information
Technology Co., Ltd
Shanghai 201306 (CN)

(72) Inventors:
• ZHANG, Yao
  Shanghai 201306 (CN)
• JIANG, Guang
  Shanghai 201306 (CN)
• ZHANG, Xishan
  Shanghai 201306 (CN)
• ZHOU, Shiyi
  Shanghai 201306 (CN)
• HUANG, Di
  Shanghai 201306 (CN)
• LIU, Chang
  Shanghai 201306 (CN)
• GUO, Jiaming
  Shanghai 201306 (CN)

(74) Representative: Boult Wade Tennant LLP
Salisbury Square House
8 Salisbury Square
London EC4Y 8AP (GB)

(54) METHOD AND APPARATUS FOR PROCESSING DATA, AND RELATED PRODUCT

(57) Embodiments of the present disclosure relate to a method and an apparatus for processing data, and related products. The embodiments of the present disclosure provide a board card including a storage component, an interface device, a control component, and an artificial intelligence chip. The artificial intelligence chip is connected to the storage component, the control component, and the interface device, respectively; the storage component is configured to store data; the interface device is configured to implement data transfer between the artificial intelligence chip and external equipment; and the control component is configured to monitor a state of the artificial intelligence chip. The board card is configured to perform artificial intelligence operations.

FIG.10

**Description**

**TECHNICAL FIELD**

Embodiments of the present disclosure relate generally to the technical field of computer technology, and more particularly, to a method and an apparatus for processing data, and related products.

**BACKGROUND**

With the continuous development of artificial intelligence technology, it is applied in more and more extensive fields, and have been well applied in the fields of image recognition, speech recognition, natural language processing and the like. However, as the complexity and accuracy of artificial intelligence algorithms increase, machine learning models are getting larger and larger, and the amount of data that needs to be processed is also getting larger. When a large amount of data is processed, large calculation and time overhead are required, and the processing efficiency is low.

**SUMMARY**

Based on the situation above, the embodiments of the present disclosure provide a method and an apparatus for processing data, and related products.

A first aspect of the present disclosure provides a method for processing data. The method may include: obtaining a group of data to be quantized for a machine learning model; using a plurality of point locations to respectively quantize the group of data to be quantized to determine a plurality of groups of quantized data, where each of the plurality of point locations specifies a position of a decimal point in the plurality of groups of quantized data; and selecting a point location from the plurality of point locations to quantize the group of data to be quantized based on a difference between each of the plurality of groups of quantized data and the group of data to be quantized.

A second aspect of the present disclosure provides an apparatus for processing data. The apparatus may include: an obtaining unit configured to obtain a group of data to be quantized for a machine learning model; a determining unit configured to use a plurality of point locations to respectively quantize the group of data to be quantized to determine a plurality of groups of quantized data, where each of the plurality of point locations specifies a position of a decimal point in the plurality of groups of quantized data; and a selecting unit configured to select a point location from the plurality of point locations to quantize the group of data to be quantized based on a difference between each of the plurality of groups of quantized data and the group of data to be quantized.

A third aspect of the present disclosure provides a computer readable storage medium, on which a computer program is stored. When the program is executed, the method according to various embodiments of the present disclosure is implemented.

A fourth aspect of the present disclosure provides an artificial intelligence chip including the apparatus for processing data according to various embodiments of the present disclosure.

A fifth aspect of the present disclosure provides electronic equipment including the artificial intelligence chip according to various embodiments of the present disclosure.

A sixth aspect of the present disclosure provides a board card including a storage component, an interface device, a control component, and the artificial intelligence chip according to various embodiments of the present disclosure. The artificial intelligence chip is connected to the storage component, the control component, and the interface device, respectively; the storage component is configured to store data; the interface device is configured to implement data transfer between the artificial intelligence chip and external equipment; and the control component is configured to monitor a state of the artificial intelligence chip.

Through the derivation of the technical features in the claims, the technical effect of the technical problems in the background may be achieved. Other features and aspects of the present disclosure will become clear based on the following detailed description of exemplary embodiments with reference to the accompanying drawings.

**BRIEF DESCRIPTION OF THE DRAWINGS**

The drawings are included in the specification and constitute a part of the specification. Together with the specification, the drawings illustrate exemplary embodiments, features, and aspects of the present disclosure, and are used to explain the principles of the present disclosure.

FIG. 1 is a schematic diagram of a processing system configured to implement a method for processing data according to an embodiment of the present disclosure;
FIG. 2 is a schematic diagram of an exemplary architecture of a neural network according to an embodiment of the present disclosure;

FIG. 3 is a schematic diagram of a process for quantizing data according to an embodiment of the present disclosure;

FIG. 4 is a schematic diagram of a quantization process according to an embodiment of the present disclosure;

FIG. 5 is a schematic diagram of a process for processing data according to an embodiment of the present disclosure;

FIG. 6 is a flowchart of a method for processing data according to an embodiment of the present disclosure;

FIG. 7 is a schematic diagram of various quantization solutions based on various point locations according to an embodiment of the present disclosure;

FIG. 8 is a flowchart of a data processing method according to an embodiment of the present disclosure;

FIG. 9 is a block diagram of an apparatus for processing data according to an embodiment of the present disclosure; and

FIG. 10 is a block structure diagram of a board card according to an embodiment of the present disclosure.

## DETAILED DESCRIPTION OF THE EMBODIMENTS

Technical solutions in embodiments of the present disclosure will be described clearly and completely hereinafter with reference to the drawings in the embodiments of the present disclosure. Obviously, the embodiments to be described are merely some of, but not all of embodiments of the present disclosure. All other embodiments obtained by those of ordinary skill in the art based on the embodiments of the present disclosure without creative efforts shall fall within the protection scope of the present disclosure.

It should be understood that terms such as "first", "second", "third", and "fourth" in the claims, the specification, and drawings are used for distinguishing different objects rather than describing a specific order. It should be understood that the terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely for the purpose of describing particular embodiments rather than limiting the present disclosure. As being used in the specification and the claims of the disclosure, unless the context clearly indicates otherwise, the singular forms "a", "an" and "the" are intended to include the plural forms. It should also be understood that the term "and/or" used in the specification and the claims refers to any and all possible combinations of one or more of relevant listed items and includes these combinations.

As being used in this specification and the claims, the term "if" can be interpreted as "when", or "once" or "in response to a determination" or "in response to a case where something is detected" depending on the context. Similarly, depending on the context, the clause "if it is determined that" or "if [a described condition or event] is detected" can be interpreted as "once it is determined that", or "in response to a determination", or "once [a described condition or event] is detected", or "in response to a case where [a described condition or event] is detected".

Generally speaking, when quantizing data, data to be quantized may be scaled. For example, when it has been determined how many bits of binary are used to represent quantized data, a point location may be used to describe a position of a decimal point. At this time, the decimal point may divide the quantized data into an integer part and a decimal part. Therefore, a suitable point location should be found to quantize the data so as to minimize or reduce the loss of data quantization.

Traditionally, a technical solution for determining the point location based on a value range of a group of data to be quantized has been proposed. However, because the data to be quantized may not always be uniformly distributed, the point location determined based on the value range may fail in performing quantization in an accurate manner, and for some data to be quantized, there may appear a large loss of precision.

Based on the situation above, a new solution for determining the point location used in the quantization process has been proposed in the embodiments of the present disclosure. This solution may achieve a smaller loss of quantization precision than traditional technologies. According to the embodiments of the present disclosure, after obtaining the group of data to be quantized for a machine learning model, a plurality of groups of quantized data are determined by using a plurality of point locations to respectively quantize the group of data to be quantized. Each of the plurality of point locations specifies the position of the decimal point in the plurality of groups of quantized data. Based on a difference between each of the plurality of groups of quantized data and the group of data to be quantized, the point location is selected from the plurality of point locations to quantize the group of data to be quantized. Through this way, a more suitable point location may be found.

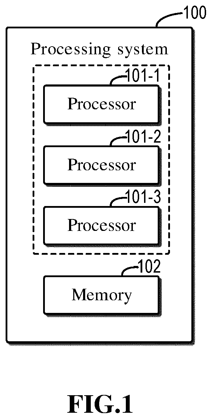

Basic principles and several exemplary implementations of the present disclosure are described below with reference to FIGS. 1 to 10. It should be understood that these exemplary embodiments are given only to enable those skilled in the art to better understand and implement the embodiments of the present disclosure, but not to limit the scope of the present disclosure in any way.

FIG. 1 is a schematic diagram of a processing system 100 configured to implement a method for processing data according to an embodiment of the present disclosure. As shown in FIG. 1, the processing system 100 may include a plurality of processors 101-1, 101-2, 101-3 (collectively referred to as processors 101) and a memory 102. The processors 101 are configured to execute an instruction sequence and the memory 102 is configured to store data. The memory 102 may include a random access memory (RAM) and a register file. The processors 101 in the processing system 100 may share part of a storage space, such as part of a RAM storage space and the register file and may also have their own storage spaces at the same time.

It should be understood that the method in the embodiments of the present disclosure may be applied to any one processor of the processing system 100 (for example, an artificial intelligence chip) that includes a plurality of processors (multi-core). The processor may be a general-purpose processor such as a central processing unit (CPU) or an intelligence processing unit (IPU) for performing artificial intelligence operations. The artificial intelligence operations may include machine learning operations, brain-like operations, and the like. The machine learning operations may include neural network operations, k-means operations, support vector machine operations, and the like. The artificial intelligence processor may include, for example, one or a combination of a graphics processing unit (GPU), a neural-network processing unit (NPU), a digital signal processor (DSP), and a field-programmable gate array (FPGA) chip. The present disclosure does not limit the specific types of the processors. In addition, the types of the plurality of processors in the processing system 100 may be the same or different, which is not limited in the present disclosure.

In a possible implementation, the processors mentioned in the present disclosure may include a plurality of processing units, and each processing unit may independently execute various assigned tasks, for example, a convolution operation task, a pooling task, or a fully-connected task. The present disclosure does not limit the processing units and the tasks executed by the processing units.

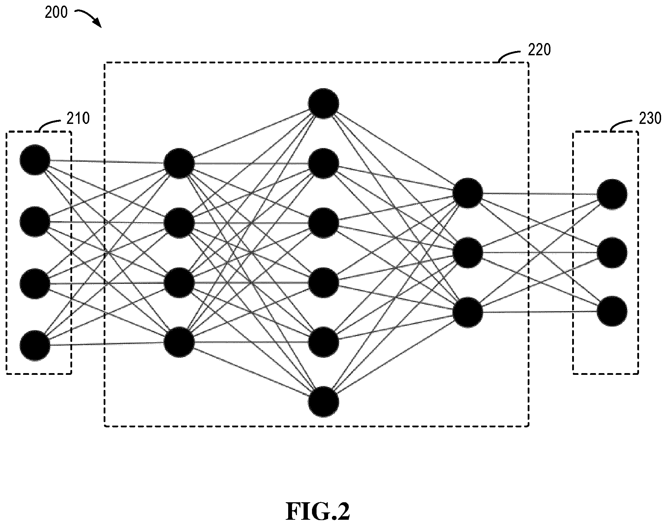

FIG. 2 is a schematic diagram of an exemplary architecture of a neural network 200 according to an embodiment of the present disclosure. A neural network (NN) is a mathematical model which imitates structures and functions of a biological neural network and performs calculations through connecting a large number of neurons. Therefore, the neural network is a computational model composed of plenty of connected nodes (or called "neurons"). Each node represents a specific output function called an activation function. A connection between each two neurons represents a weighted value that passes through the connection signal and is called a weight. The weight can be viewed as "memory" of the neural network. An output of the neural network varies according to different connection methods between neurons, different weights, and different activation functions. The neuron is a basic unit of the neural network, which obtains a certain count of inputs and a bias. The certain count of inputs and the bias are multiplied by a weight when a signal (value) arrives. The connection refers to connecting one neuron to another neuron in another layer or a same layer, and the connection is accompanied by an associated weight. In addition, the bias is an extra input of the neuron, which is always 1 and has its own connection weight. This ensures that the neuron can be activated even if all inputs are empty (all 0).

In applications, if no non-linear function is applied to the neuron in the neural network, the neural network is only a linear function and is not powerful than a single neuron. If an output result of the neural network is between 0 and 1, for example, in a case of cat and dog identification, an output close to 0 can be regarded as a cat and an output close to 1 can be regarded as a dog. The activation function such as a sigmoid activation function is introduced into the neural network to realize the cat and dog identification. A return value of the activation function is a number between 0 and 1. Therefore, the activation function is configured to introduce non-linearity into the neural network, which may narrow down the range of a neural network operation result. In fact, how the activation function is represented is not important, and what is important is to parameterize a non-linear function by some weights, thus the non-linear function may be changed by changing the weights.

FIG. 2 is a schematic structure diagram of the neural network 200. The neural network shown in FIG. 2 may include three layers: an input layer 210, a hidden layer 220, and an output layer 230. The hidden layer 220 shown in FIG. 2 may include three layers. Of course, the hidden layer 220 may also include more or fewer layers. The neurons in the input layer 210 are called input neurons. As a first layer in the neural network, the input layer inputs signals (values) and transmits them to a next layer. The input layer does not perform any operation on the input signals (values) and has no associated weight or bias. The neural network shown in FIG. 2 may be able to receive four input signals (values).

The hidden layer 220 is configured to apply different changing neurons (nodes) to input data. The hidden layer is a representation of neurons arranged vertically. The neural network shown in FIG. 2 may include three hidden layers. A first hidden layer includes four neurons (nodes), a second hidden layer includes six neurons, and a third hidden layer includes three neurons. Finally, the hidden layer transmits values to the output layer. In the neural network 200 shown in FIG. 2, the neurons in the three hidden layers are fully connected between each other, and each of the neurons in each hidden layer is connected with each neuron in the next layer. It should be noted that in some neural networks, the hidden layers may not be fully connected.

Neurons in the output layer 230 are called output neurons. The output layer receives an output from the last hidden layer. Through the output layer 230, a desired value and a desired range may be determined. In the neural network shown in FIG. 2, the output layer may include three neurons; in other words, the output layer may include three output signals (values).

In practical applications, the neural network is configured to train in advance based on a large number of sample data (including input data and output data). After the training is completed, the neural network is able to obtain an accurate output for the input from a real environment in the future.

Before the discussion of a neural network training, a loss function needs to be defined. The loss function is a function indicating how well the neural network performs on a particular task. The most direct method to do this is as follows: transferring each piece of sample data along the neural network in the training process to obtain a number, performing subtraction on this number and an expected actual value to obtain a difference, and then squaring the difference. What is calculated is a distance between a predicted value and a true value, and training the neural network is to narrow down the distance or reduce a value of the loss function.

At the beginning of the neural network training, the weight needs to be initialized randomly. It is apparent that an initialized neural network may not provide a good result. In the training process, if starting from the initialized neural network, a network with high precision may be obtained through the training. At the same time, it is also hoped that at the end of the training, the value of the loss function becomes particularly small.

A training process of the neural network may be divided into two stages. A first stage is to perform a forward processing on a signal by sending the signal from the input layer 210 to the hidden layer 220 and finally to the output layer 230. A second stage is to perform a back propagation on a gradient, by propagating the gradient from the output layer 230 to the hidden layer 220 and finally to the input layer 210, and sequentially adjusting weights and biases of each layer in the neural network according to the gradient.

In the process of forward processing, an input value is input into the input layer 210 in the neural network and an output (called a predicted value) is obtained from the output layer 230 in the neural network. When the input value is input into the input layer 210 in the neural network, the input layer 210 does not perform any operation. In the hidden layer, the second hidden layer obtains a predicted intermediate result value from the first hidden layer to perform a computation operation and an activation operation, and then sends the obtained predicted intermediate result value to the next hidden layer. The same operations are performed in the subsequent layers to obtain the output value in the output layer 230 in the neural network.

After the forward processing, the output value called the predicted value is obtained. In order to calculate an error produced in the forward process, the predicted value is compared with the actual output value to obtain the corresponding error through the loss function. A chain rule of differential calculus is used in the back propagation. In the chain rule, derivatives of errors corresponding to the weights of the last layer in the neural network are calculated first. The derivatives are called gradients, which are then used to calculate gradients of a penultimate layer in the neural network. This process is repeated until the gradients of each weight in the neural network are obtained. Finally, the corresponding gradients are subtracted from the weights and then the weights are updated once to reduce errors.

In addition, for the neural network, a fine-tuning refers to loading a trained neural network. A fine-tuning process may also be divided into two stages, which are the same as those of training process. A first stage is to perform the forward processing on the signal, and a second stage is to perform the back propagation on the gradients to update the weights in the trained neural network. A difference between training and fine-tuning is that the training refers to randomly processing the initialized neural network and starts from the beginning, while the fine-tuning does not start from the beginning.

In the process of training or fine-tuning the neural network, the weights in the neural network are updated based on the gradients once every time the neural network performs the forward processing on the signal and the corresponding back propagation on an error, and the whole process is called an iteration. In order to obtain a neural network with an expected precision, a very large sample data group is required during the training process. In this case, it is impossible to input the entire sample data group into a computer at once. Therefore, in order to solve the problem, the sample data group needs to be divided into a plurality of blocks and then each block of the sample data group is passed to the computer. After the forward processing is performed on each block of the sample data group, the weights in the neural network are correspondingly updated once. The neural network performs the forward processing on a complete sample data group and returns a weight update correspondingly, and this process is called an epoch. In practice, it is not enough to perform the forward processing on the complete data group in the neural network only once. It is necessary to transmit the complete data group in the same neural network a plurality of times; in other words, a plurality of epochs are required to obtain a neural network with an expected precision.

In the process of training or fine-tuning the neural network, it is usually hoped that the faster the better, and the higher the accuracy, the better. Since data in the neural network is represented in a high-precision data format such as floating-point numbers, all the data involved in the process of training or fine-tuning is in the high-precision data format and then the trained neural network is quantized. For example, when quantization objects are the weights of the whole neural network and the quantized weights are 8-bit fixed-point numbers, since the neural network usually contains millions of connections, almost all the space is occupied by weights that are connected with neurons. The weights are different the floating-point numbers. The weights of each layer tend to be normally distributed in a certain interval, such as (-3.0, 3.0). A maximum value and a minimum value corresponding to the weights of each layer in the neural network are stored, and a value of each floating-point number is represented by an 8-bit fixed-point number. The space within the range of the maximum and the minimum value is linearly divided into 256 quantization intervals, in which each quantization interval is represented by the 8-bit fixed-point number. For example, in an interval (- 3.0, 3.0), a byte 0 represents - 3.0 and a byte 255 represents 3.0. Similarly, a byte 128 represents 0.

For the data represented in the high-precision data format such as floating-point numbers, based on rules of computation representation of floating-point and fixed-point numbers according to a computer architecture, for a fixed-point computation and a floating-point computation of the same length, a floating-point computation model is more complex and needs more logic components to constitute a floating-point computation unit. The volume of the floating-point computation unit is larger than that of a fixed-point computation unit. Moreover, since the floating-point computation unit requires more resources to process, a power consumption gap between the fixed-point computation unit and the floating-point computation unit is usually orders of magnitude. In other words, a chip area and a power consumption of the floating-point computation unit are many times larger than that of the fixed-point computation unit.

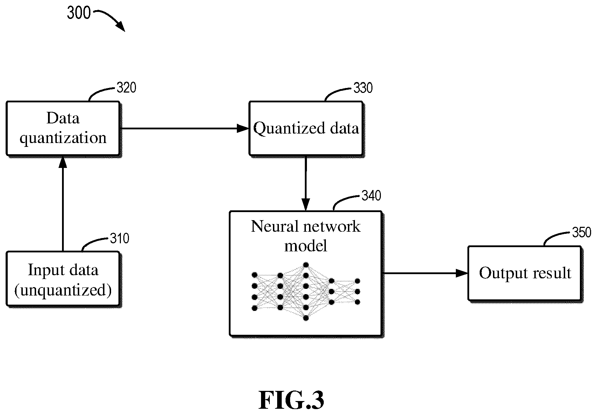

FIG. 3 is a schematic diagram of a process 300 for quantizing data according to an embodiment of the present disclosure. Referring to FIG. 3, input data 310 is a floating-point number to be quantized, such as a 32-bit floating-point number. If the input data 310 is directly input to a neural network model 340 for processing, more computing resources may be consumed and a processing speed may be slow. Therefore, at box 320, the input data may be quantized to obtain quantized data 330 (for example, an 8-bit integer). If the quantized data 330 is input into the neural network model 340 for processing, since a calculation of 8-bit integers is faster, the neural network model 340 may complete a processing of the input data faster and generate a corresponding output result 350.

In the quantization process from the input data to be quantized 310 to the quantized data 330, some precision loss may be caused to a certain extent, and the precision loss may directly affect the accuracy of the output result 350. Therefore, in the quantization processing of the input data 330, it is necessary to ensure that the precision loss of the quantization process is minimal or as small as possible.

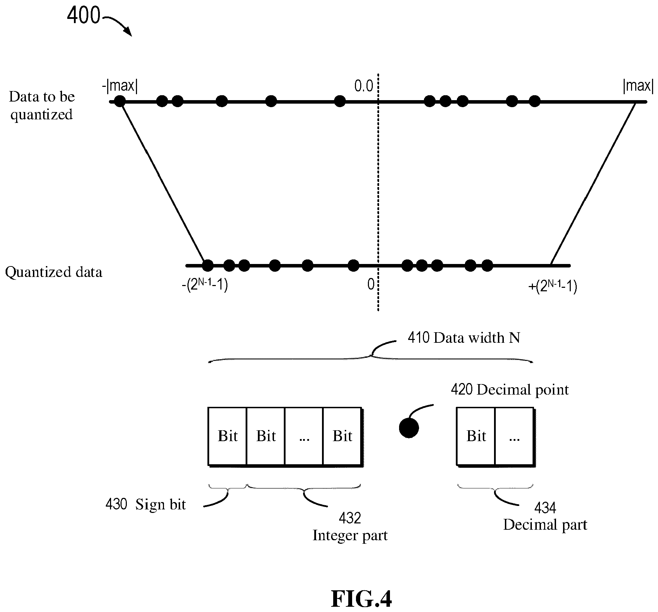

Hereinafter, a quantization process will be outlined with reference to FIG. 4. FIG. 4 is a schematic diagram of a quantization process 400 according to an embodiment of the present disclosure. FIG. 4 shows a simple quantization process, where each piece of data to be quantized in a group of data to be quantized is mapped to a group of quantized data. At this time, a range of the group of data to be quantized is from -|max| to |max|, and a range of the group of quantized data is from $-(2^{n-1} - 1)$ to $+(2^{n-1} - 1)$. Here, n represents a predefined data width 410, in other words, how many bits are used to represent the quantized data. Continuing the above example, when 8 bits are used to represent the quantized data, if a first bit represents a sign bit, the range of the quantized data is from -127 to +127.

It will be understood that, in order to represent the quantized data more accurately, a n bit data structure shown in FIG. 4 may also be used to represent the quantized data. As shown in the figure, the n bit may be used to represent the quantized data, where the leftmost bit represents a sign bit 430, which indicates whether the data is a positive number or a negative number. A decimal point 420 may be set. The decimal point 420 here represents the boundary between an integer part 432 and a decimal part 434 in the quantized data. A left side of the decimal point number is a positive power of 2, and a right side is a negative power of 2. In the context of the present disclosure, the position of the decimal point may be represented by the point location. It will be understood that when the data width 410 is predetermined, the position of the decimal point 420 is moved by adjusting the point location (represented by an integer), and the range and precision represented by the n bit data structure may be changed.

For example, assuming that the decimal point 420 is located after the rightmost bit, then the sign bit 430 may include 1 bit, the integer part 432 may include a n - 1 bit, and the decimal part 434 may include 0 bit. Therefore, a range represented by a n bit data structure is from $-(2^{n-1} - 1)$ to $+(2^{n-1} - 1)$, and the precision is represented by the integer. For another example, assuming that the decimal point 420 is located before the rightmost bit, then the sign bit 430 may include 1 bit, the integer part 432 may include a n - 2 bit, and the decimal part 434 may include 1 bit. Therefore, the range represented by the n bit data structure is from $-(2^{n-2} - 1)$ to $+(2^{n-2} - 1)$, and the precision is represented by a decimal fraction "0.5". At this time, it is necessary to determine the point location so that the range and precision represented by the n bit data structure may more closely match those of the data to be quantized.

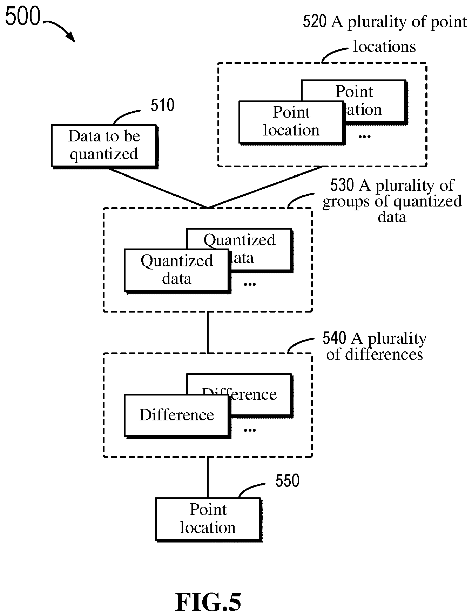

According to an embodiment of the present disclosure, a method for processing data is provided. The embodiments of the present disclosure will be outlined with reference to FIG. 5. FIG. 5 is a schematic diagram of a process for processing data 500 according to an embodiment of the present disclosure. A plurality of quantization processes may be performed based on a plurality of point locations 520 according to an embodiment of the present disclosure. For example, for data to be quantized 510, a corresponding quantization process may be performed based on each of the plurality of point locations 520, so as to obtain a plurality of groups of quantized data 530. Then, each of the plurality of groups of quantized data 530 may be compared with the data to be quantized 510 to determine a difference between the two. By selecting a point location corresponding to the smallest difference from the obtained a plurality of differences 540, a point location 550 most suitable for the data to be quantized 510 may be determined. According to an embodiment of the present disclosure, the quantized data may be represented with higher precision.

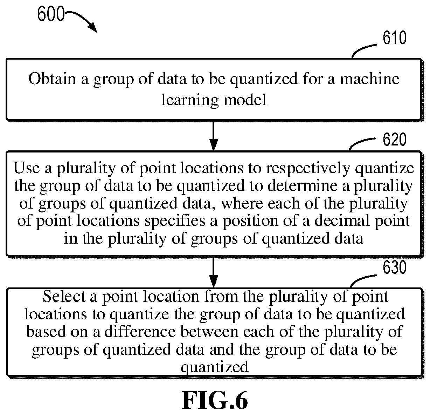

Hereinafter, more details about data processing will be described with reference to FIG. 6. FIG. 6 is a flowchart of a method for processing data 600 according to an embodiment of the present disclosure. As shown in FIG. 6, at box 610, a group of data to be quantized for a machine learning model is obtained. For example, referring to FIG. 3 above, the group of data to be quantized obtained here may be the input data 310. By quantizing the input data 310, the processing speed of the neural network model 340 may be accelerated. In addition, some parameters (such as weights) of the neural network model itself may also be quantized. By quantizing the parameters of the neural network, the size of the neural network model may be reduced. In some embodiments, each piece of data to be quantized in a group of data to be quantized may be a 32-bit floating-point number. Alternatively, the data to be quantized may also be floating-point numbers with other bits, or other data types.

At box 620, the plurality of groups of quantized data may be determined by using the plurality of point locations to quantize the group of data to be quantized respectively. Here, each of the plurality of point locations specifies the position of the decimal point in the plurality of groups of quantized data. According to an embodiment of the present disclosure, each of the plurality of point locations is represented by the integer. The point location may be determined first, and then an expansion may be performed on the point location to obtain more point locations.

According to an embodiment of the present disclosure, one of the plurality of point locations may be obtained based on a range associated with the group of data to be quantized. Hereinafter, for the convenience of description, the point location will be represented by an integer $S$, and a value of the integer $S$ represents the number of bits included in the integer part 432. For example, $S = 3$ represents that the integer part 432 includes 3 bits. Assuming that original data to be quantized is expressed as $F_x$, in other words, data to be quantized $I_x$ is represented by the n bit data structure, formula 1 will be generated.

$$F_x \approx I_x \times 2^s \qquad \text{Formula 1}$$

At this time, quantized data $\hat{F}_x$ may be represented by formula 2.

$$\widehat{F_x} = round(\frac{F_x}{2^s}) \times 2^s \qquad \text{Formula 2}$$

In formula 2, round represents a round-down operation. Therefore, a point location $S$ here may be represented by formula 3.

$$S = ceil\left(log_2\left(\frac{p}{2^{n-1}-1}\right)\right) \qquad \text{Formula 3}$$

In formula 3, p represents a maximum value of an absolute value of the group of data to be quantized. Alternatively and/or additionally, p represents a range determined in other ways. In formula 3, ceil represents a round-up operation. One of the plurality of point locations (for example, $S0$) may be determined based on the above formula 3. According to an embodiment of the present disclosure, other point locations of the plurality of point locations may be determined based on integers adjacent to the obtained point location $S0$. The "adjacent" integers here refer to integers that have adjacent values to the integer $S0$. According to an embodiment of the present disclosure, an increment operation may be performed on an integer representing the point location to determine one of the other point locations. According to an embodiment of the present disclosure, a decrement operation may also be performed on an integer representing the point location to determine one of the other point locations. For example, assuming that a value of $S0$ is 3, another adjacent integer 3+1=4 may be obtained by incrementing, and another adjacent integer 3-1=2 may be obtained by decrementing.

According to an embodiment of the present disclosure, considering a plurality of point locations near the point location and by comparing quantization effect of the quantization process based on the plurality of point locations, the most suitable point location for the group of data to be quantized may be selected from the plurality of point locations. Compared with the technical solution that only determines the point location based on formula 3, the precision of quantization process may be improved according to the embodiments of the present disclosure.

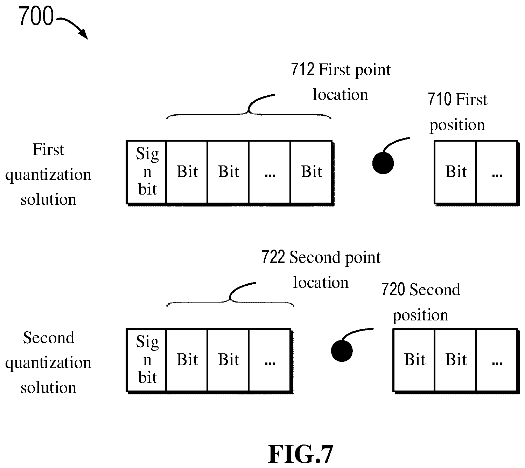

Hereinafter, more details about the embodiments of the present disclosure will be described with reference to FIG. 7. FIG. 7 is a schematic diagram 700 of various quantization solutions based on various point locations according to an embodiment of the present disclosure. As shown in FIG. 7, in a first quantization solution, the decimal point is located at a first position 710. A first point location 712 may be determined according to formula 3 described above. Then, by performing a decrement operation on the first point location 712, a second point location 722 may be determined.

At this time, the decimal point moves to the left to a second position 720.

It would be understood that although FIG. 7 only schematically shows that a decrement operation is performed on the first point location 712 in order to determine the point location, an increment operation and/or a decrement operation may also be performed on the first point location 712 respectively, so as to determine more point locations according to an embodiment of the present disclosure. According to an embodiment of the present disclosure, a greater number of increment and decrement operations may also be performed in order to determine more point locations. For example, different point locations may be determined respectively: $51 = S0 + 1$, $S2 = S0 - 1$, $S3 = S0 + 2$, $S4 = S0 - 2$, and the like.

In the case where a plurality of point locations such as $S0, 51, S2, S3, S4$ have been determined, the quantization operation may be performed on each piece of data to be quantized $F_x$ in the group of data to be quantized based on the formula 2 described above. Specifically, in formula 2, $F_x$ represents the data to be quantized. By respectively replacing the point location $S$ in formula 2 with the plurality of point locations $S0, 51, S2, S3, S4$, corresponding quantized data $\widehat{F_x 0}$, $\widehat{F_x 1}$, $\widehat{F_x 2}$, $\widehat{F_x 3}$, $\widehat{F_x 4}$ may be obtained.

It will be understood that the $F_x$ described above only represents one piece of data to be quantized in the group of data to be quantized, and there may also be a plurality of (for example, m) of data to be quantized in the group of quantized data. At this time, each piece of data to be quantized may be processed respectively based on the process described above, so as to obtain the corresponding quantized data. Based on each point location, a corresponding group of quantized data (m) may be obtained.

At box 530, based on the difference between each of the plurality of groups of quantized data and the group of data to be quantized, the point location is selected from the plurality of point locations to quantize the group of data to be quantized. Through research and a large number of experiments, the inventors of the present disclosure have discovered that the difference between the data before and after quantization may reflect the loss of precision before and after quantization, and the smaller the difference was, the smaller the loss of precision in the quantization operation would be. Therefore, the difference between the data before and after quantization is used as an index for selecting the best point location in the embodiments of the present disclosure, which may have a smaller loss of precision than traditional solutions.

Continuing the above example, the difference may be determined based on a comparison of the quantized data $\widehat{F_x 0}$, $\widehat{F_x 1}$, $\widehat{F_x 2}$, $\widehat{F_x 3}$, $\widehat{F_x 4}$ and the data to be quantized $F_x$. According to an embodiment of the present disclosure, the difference may be determined based on a variety of ways. For example, formula 4 or formula 5 shown below may be applied to determine the difference between the data before and after quantization.

$$Diff = |F_x - \widehat{F_x}| \qquad\qquad \text{Formula 4}$$

$$Diff = \left|\frac{F_x - \widehat{F_x}}{F_x}\right| \qquad\qquad \text{Formula 5}$$

In formula 4 and formula 5, *Diff* represents a difference for the data to be quantized, $F_x$ represents the data to be quantized, $\hat{F}_x$ represents the quantized data, and $\|$ represents the operation of taking the absolute value. For example, for each point location and each piece of data to be quantized in the group of data to be quantized, an absolute value of the difference between the data before and after the quantization may be determined, respectively. For m pieces of data to be quantized in a group, m difference may be obtained. Then, a difference for the point location may be determined based on the obtained m difference.

For example, for the point location $S0$, the m difference between the data before and after the quantization may be determined based on the point location $S0$. Then, for example, by summing the m difference (alternatively and/or additionally, other operations may be used), the difference *Diff0* for the point location $S0$ may be obtained. Similarly, differences *Diff1, Diff2, Diff3, Diff4* for other point locations $51$ $S2$, $53$, $S4$ may also be obtained, respectively.

According to an embodiment of the present disclosure, the smallest difference may be selected from the plurality of differences, and a point location corresponding to the smallest difference may be selected from the plurality of point locations to perform the quantization operation. For example, assuming that the difference *Diff1* determined based on the point location $51$ is the smallest difference, the point location $51$ may be selected for subsequent quantization processing.

According to an embodiment of the present disclosure, for the sake of simplicity, a plurality of differences for a plurality of point locations may also be determined based on a mean value. For example, a mean value $F_{mean}$ of the

group of data to be quantized may be calculated (for example, it may be called an original mean value). The mean value here may be determined based on the mean value of each piece of data to be quantized in the group of data to be quantized, for example. Similarly, mean values $\widehat{F_{mean}}0$, $\widehat{F_{mean}}1$, $\widehat{F_{mean}}2$, $\widehat{F_{mean}}3$, $\widehat{F_{mean}}4$ of a group of quantized data may be calculated (for example, they may be called quantized mean values). Further, one of the plurality of differences may be determined based on the quantized mean value and the original mean value. Specifically, the difference for each of the plurality of point locations may be determined based on the following formula 6 or formula 7.

$$Diff = |F_{mean} - \widehat{F_{mean}}| \qquad \text{Formula 6}$$

$$Diff = |\frac{F_{mean} - \widehat{F_{mean}}}{F_{mean}}| \qquad \text{Formula 7}$$

In formula 6 and formula 7, $F_{mean}$ represents a mean value of the group of data to be quantized, and $F_{mean}$ represents a mean value of the group of quantized data. Specifically, the difference $Diff0$ of the point location $S0$ may be obtained based on the formula 6 or formula 7 above. Similarly, the differences $Diff1$, $Diff2$, $Diff3$, $Diff4$ for other point locations 51, $S2$, $S3$, $S4$ may be obtained, respectively. Further, the point location corresponding to the smallest difference may be selected from the plurality of point locations $S0$, 51, $S2$, $S3$, $S4$ to perform the quantization operation. Adopting the mean value instead of determining the difference in the group of data to be quantized between each piece of data to be quantized and each piece of quantized data, data processing efficiency may be improved and a speed of determining the point location may be accelerated.

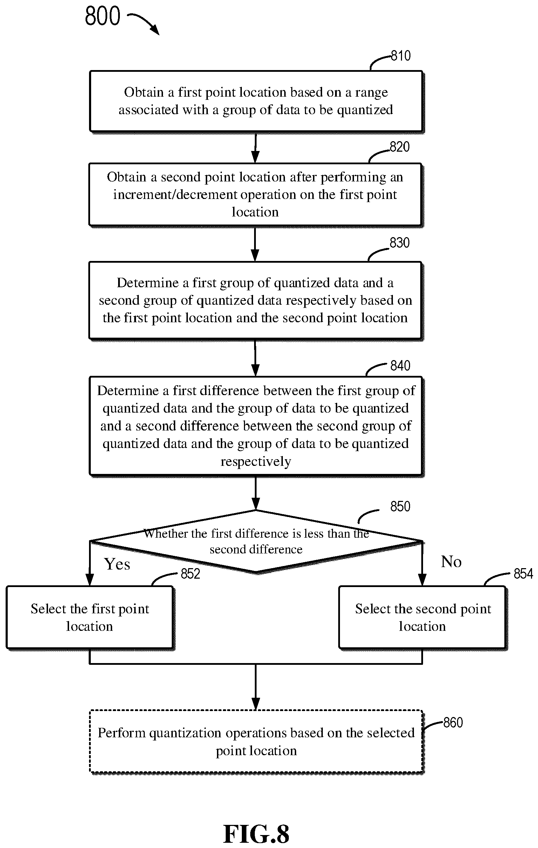

A number of formulas that may be involved during the processing have been described above. In the following, the detailed flow of data processing will be described with reference to FIG. 8. FIG. 8 is a flowchart of a method for processing data 800 according to an embodiment of the present disclosure. At box 810, a first point location (for example, $S0$) may be obtained based on the range associated with the group of data to be quantized. Here, the point location $S0$ may be obtained based on formula 3. At box 820, a second point location (for example, 51 = $S0$ + 1) may be obtained after performing the increment/decrement operation on the first point location.

At box 830, the first group of quantized data and the second group of quantized data may be determined based on the first point location $S0$ and the second point location 51, respectively. Specifically, for each piece of data to be quantized in the group of data to be quantized, the corresponding quantized data may be obtained based on formula 2. At box 840, the first difference $Diff0$ between the first group of quantized data and the group of data to be quantized and the second difference $Diff1$ between the second group of quantized data and the group of data to be quantized may be determined, respectively. For example, the first difference $Diff0$ and the second difference $Diff1$ may be determined based on any one of formulas 4 to 7. At box 850, the first difference $Diff0$ and the second difference $Diff1$ may be compared, and if the first difference is less than the second difference, the method 800 proceeds to the box 852 to select the first point location. If the first difference is greater than (or equal to) the second difference, the method 800 proceeds to the box 854 to select the second point location. As shown by the dashed box 860, the selected point location may be used to perform quantization processing on the data to be quantized.

It would be understood that the quantization processing may be performed on the initial group of data to be quantized at the box 860. In the case where a distribution of subsequent data to be quantized is similar to a distribution of the initial group of data to be quantized, the quantization processing may also be performed on other subsequent groups of data to be quantized. In the following, specific application environment of the neural network model will be described. According to an embodiment of the present disclosure, the group of data to be quantized may include a group of floating-point numbers in the neural network model. The selected point locations may be used to perform quantization operations in order to convert the floating-point numbers with higher complexity to those with lower complexity. According to an embodiment of the present disclosure, the selected point location may be used to quantize the group of data to be quantized to obtain the group of quantized data. Specifically, based on the selected point location, the group of data to be quantized is mapped to the group of quantized data, and the position of the decimal point in the group of quantized data is determined by the selected point location. Assuming that the selected point location is 4, 4 bits may be used in the quantization process to represent the integer part of the quantized data. Then, the obtained group of quantized data may be input to the neural network model for processing.

According to an embodiment of the present disclosure, the selected point location may also be used to perform quantization on other subsequent pieces of data to be quantized. Specifically, another group of data to be quantized including the group of floating-point numbers in the neural network model may be obtained. The selected point location may be used to quantize the another group of data to be quantized to obtain another group of quantized data, and the obtained another group of quantized data may be input to the neural network model for processing.

It should be noted that for the sake of conciseness, the foregoing method embodiments are all described as a series of combinations of actions, but those skilled in the art should know that the present disclosure is not limited by the described order of action since the steps may be performed in a different order or simultaneously according to the present disclosure. Secondly, those skilled in the art should also understand that the embodiments described in the specification are all optional, and the actions and modules involved are not necessarily required for this disclosure.

Furtherer, it should be explained that though the steps in the flowchart are shown by following the direction of arrows, yet these steps may not necessarily be performed according to the order indicated by the arrows. Unless clearly stated herein, the order for performing these steps is not strictly restricted. These steps may be performed in a different order. Additionally, at least part of the steps shown in the flow chart may include a plurality of sub-steps or a plurality of stages. These sub-steps or stages may not necessarily be performed and completed at the same time; instead, these sub-steps or stages may be performed at different time. These sub-steps or stages may not necessarily be performed sequentially either; instead, these sub-steps or stages may be performed in turn or alternately with at least part of other steps, or sub-steps of other steps, or stages.

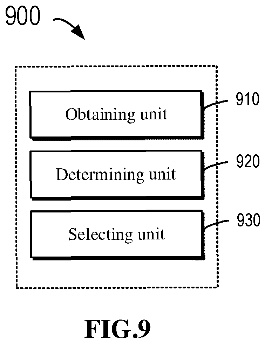

FIG. 9 is a block diagram of an apparatus 900 for processing data according to an embodiment of the present disclosure. As shown in FIG. 9, the apparatus 900 may include an obtaining unit 910, a determining unit 920, and a selecting unit 930. The obtaining unit 910 is configured to obtain the group of data to be quantized for a machine learning model. The determining unit 920 is configured to determine the plurality of groups of quantized data by using the plurality of point locations to respectively quantize the group of data to be quantized, and each of the plurality of point locations specifies the position of the decimal point in the plurality of groups of quantized data. The selecting unit 930 is configured to select the point location from the plurality of point locations to quantize the group of data to be quantized based on the difference between each of the plurality of groups of quantized data and the group of data to be quantized.

In addition, the obtaining unit 910, the determining unit 920, and the selecting unit 930 in the apparatus 900 may also be configured to perform steps and/or actions according to various embodiments of the present disclosure.

It should be understood that the foregoing apparatus embodiments are only illustrative, and the apparatus of the present disclosure may also be implemented in other ways. For example, the division of the units/modules in the foregoing embodiment is only a logical function division, and there may be other division methods in actual implementation. For example, a plurality of units, modules, or components may be combined or integrated into another system, or some features may be omitted or not implemented.

In addition, unless otherwise specified, the functional units/modules in the various embodiments of the present disclosure may be integrated into one unit/module. Alternatively, each unit/module may exist alone physically. Alternatively, two or more units/modules may be integrated together. The above-mentioned integrated units/modules may be implemented in the form of hardware or in the form of software program modules.

When the above-mentioned integrated units/modules are implemented in the form of hardware, the hardware may be a digital circuit, an analog circuit, and the like. Physical implementation of the hardware structure may include, but is not limited to, a transistor, a memristor, and the like. Unless otherwise specified, the artificial intelligence processor may be any appropriate hardware processor, such as a CPU, a GPU, an FPGA, a DSP, an application-specific integrated circuit (ASIC), and the like. Unless otherwise specified, the storage unit may be any suitable magnetic storage medium or magneto-optical storage medium, such as a resistive random access memory (RRAM), a dynamic random access memory (DRAM), a static random access memory (SRAM), an enhanced dynamic random access memory (EDRAM), a high bandwidth memory (HBM), a hybrid memory cube (HMC), and the like.

If the integrated units/modules are implemented in the form of software program modules and sold or used as an independent product, the product may be stored in a computer readable memory. Based on such understanding, the essence of the technical solutions of the present disclosure, or a part of the present disclosure that contributes to the prior art, or all or part of technical solutions, can all or partly embodied in the form of a software product in other words, stored in a memory. The software product may include several instructions to enable a computer equipment (which may be a personal computer, a server, or a network equipment, and the like.) to perform all or part of the steps of the methods described in the embodiments of the present disclosure. The foregoing memory may include: a USB flash drive, a read-only memory (ROM), a random access memory (RAM), a mobile hard disk, a magnetic disk, or an optical disc, and other media that can store program codes.

In an embodiment, a computer readable storage medium is disclosed, on which a computer program is stored, and when the program is executed, the method according to the embodiments of the present disclosure is implemented.

In an embodiment, an artificial intelligence chip is disclosed. The artificial intelligence chip may include the above-mentioned apparatus for processing data.

In an embodiment, a board card is disclosed. The board card may include a storage component, an interface device, a control component, and the above-mentioned artificial intelligence chip. The artificial intelligence chip is connected to the storage component, the control component, and the interface device, respectively. The storage component is configured to store data. The interface device is configured to implement data transfer between the artificial intelligence chip and external equipment. The control component is configured to monitor a state of the artificial intelligence chip.

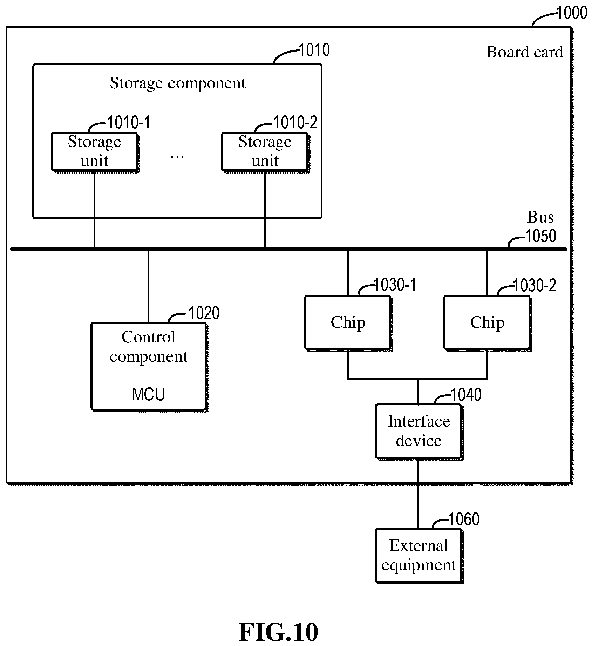

FIG. 10 is a block structure diagram of a board card 1000 according to an embodiment of the present disclosure. Referring to FIG. 10, in addition to the above-mentioned chips 1030-1 and 1030-2 (collectively referred to as chips 1030), the board card 1000 may also include other supporting components. The supporting components may include, but are not limited to, a storage component 1010, an interface device 1040, and a control component 1020. The interface device 1040 may be connected with external equipment 1060. The storage component 1010 is connected to the artificial intelligence chip 1030 through a bus 1050, and is configured to store data. The storage component 1010 may include a plurality of groups of storage units1010-1 and 1010-2. Each group of storage units is connected to the artificial intelligence chip through the bus 1050. It can be understood that each group of the storage units may be a double data rate synchronous dynamic random access memory (DDR SDRAM).

DDR may double the speed of SDRAM without increasing the clock frequency. DDR allows data to be read on the rising and falling edges of the clock pulse. The speed of DDR is twice the speed of a standard SDRAM. In an embodiment, the storage component may include four groups of storage units. Each group of the storage units may include a plurality of DDR4 particles (chips). In an embodiment, four 72-bit DDR4 controllers may be arranged inside the artificial intelligence chip, where 64-bit of each 72-bit DDR4 controller is for data transfer and 8-bit is for error checking and correcting (ECC). It can be understood that when each group of the storage units adopts DDR4-3200 particles, the theoretical bandwidth of data transfer may reach 25600MB/s.

In an embodiment, each group of the storage units may include a plurality of DDR SDRAMs arranged in parallel. DDR may transfer data twice per clock cycle. A controller for controlling the DDR is arranged in the chip to control data transfer and data storage of each storage unit.

The interface device may be electrically connected to the artificial intelligence chip. The interface device is configured to realize data transfer between the artificial intelligence chip and external equipment (for example, a server or a computer). For example, in an embodiment, the interface device may be a standard peripheral component interconnect express (PCIe) interface. For example, data to be processed is transferred from the server to the chip through a standard PCIe interface to realize data transfer. Alternatively, when a PCIe 3.0 X 16 interface is adopted for transferring, the theoretical bandwidth may reach 16000MB/s. In another embodiment, the interface device may also be another interface. The present disclosure does not restrict a specific form of the another interface as long as the interface unit can realize the transferring function. In addition, the computation result of the artificial intelligence chip may still be transferred by the interface device to external equipment (for example, a server).

The control component is electrically connected to the artificial intelligence chip. The control component is configured to monitor a state of the artificial intelligence chip. Specifically, the artificial intelligence chip and the control component may be electrically connected through an SPI interface. The control component may include a micro controller unit (MCU). If the artificial intelligence chip may include a plurality of processing chips, a plurality of processing cores, or a plurality of processing circuits, the chip is capable of driving a plurality of loads. In this case, the artificial intelligence chip may be in different working states such as multi-load state and light-load state. The working states of the plurality of processing chips, the plurality of processing cores, and/or the plurality of processing circuits in the artificial intelligence chip may be regulated and controlled by the control component.

In a possible implementation, an electronic equipment is disclosed. The electronic equipment may include the above-mentioned artificial intelligence chip. The electronic equipment may include an apparatus for processing data, a robot, a computer, a printer, a scanner, a tablet, a smart terminal, a mobile phone, a traffic recorder, a navigator, a sensor, a webcam, a server, a cloud-based server, a camera, a video camera, a projector, a watch, a headphone, a mobile storage, a wearable device, a vehicle, a household appliance, and/or a medical device.

The vehicle may include an airplane, a ship, and/or a car. The household electrical appliance may include a television, an air conditioner, a microwave oven, a refrigerator, an electric rice cooker, a humidifier, a washing machine, an electric lamp, a gas cooker, and a range hood. The medical equipment may include a nuclear magnetic resonance spectrometer, a B-ultrasonic scanner, and/or an electrocardiograph.

In the embodiments above, the description of each embodiment has its own emphasis. For a part that is not described in detail in one embodiment, reference may be made to related descriptions in other embodiments. Each technical features of the embodiments above may be randomly combined. For the sake of conciseness, not all possible combinations of the technical features of the embodiments above are described. Yet, provided that there is no contradiction, combinations of these technical features fall within the scope of the description of the present specification.

The foregoing may be better understood according to the following articles:

A1. A method for processing data, comprising obtaining a group of data to be quantized for a machine learning model;

using a plurality of point locations to respectively quantize the group of data to be quantized to determine a plurality of groups of quantized data, where each of the plurality of point locations specifies a position of a decimal point in the plurality of groups of quantized data; and
selecting a point location from the plurality of point locations to quantize the group of data to be quantized based on a difference between each of the plurality of groups of quantized data and the group of data to be quantized.

A2. The method of article A1, where each of the plurality of point locations is represented by an integer, and the method further includes:

obtaining one of the plurality of point locations based on a range associated with the group of data to be quantized; and
determining other point locations of the plurality of point locations based on integers adjacent to the obtained point location.

A3. The method of article A2, where determining other point locations of the plurality of point locations includes at least any one of the following:

incrementing an integer representing the point location to determine one of the other point locations; and
decrementing an integer representing the point location to determine one of the other point locations.

A4. The method of any one of articles A1 to 3, where selecting the point location from the plurality of point locations includes:

determining a plurality of differences between the plurality of groups of quantized data and the group of data to be quantized respectively;
selecting the smallest difference from the plurality of differences; and
selecting a point location corresponding to the smallest difference from the plurality of point locations.

A5. The method of article A4, where respectively determining the plurality of differences between the plurality of groups of quantized data and the group of data to be quantized includes: for a given group of quantized data of the plurality of groups of quantized data,

determining a group of relative differences between the given group of quantized data and the group of data to be quantized, respectively; and
determining one of the plurality of differences based on the group of relative differences.

A6. The method of article A4, where respectively determining the plurality of differences between the plurality of groups of quantized data and the group of data to be quantized may include: for a given group of quantized data of the plurality of groups of quantized data,

determining a quantized mean value of the given group of quantized data and an original mean value of the group of data to be quantized, respectively; and
determining one of the plurality of differences based on the quantized mean value and the original mean value.

A7. The method of any one of articles A1 to 6, where the group of data to be quantized includes a group of floating-point numbers in a neural network model, and the method further includes:

using a selected point location to quantize the group of data to be quantized to obtain the group of quantized data, wherein quantizing the group of data to be quantized includes: mapping the group of data to be quantized to the group of quantized data based on the selected point location, wherein the position of the decimal point in the group of quantized data is determined by the selected point location; and
inputting the obtained group of quantized data to the neural network model for processing.

A8. The method of any one of articles A1 to 6 further includes:

obtaining another group of data to be quantized including a group of floating-point numbers in a neural network model;
using a selected point location to quantize another group of data to be quantized to obtain another group of quantized data, wherein quantizing the another group of data to be quantized includes: mapping the another group of data to be quantized to the another group of quantized data based on the selected point location, wherein the position of the decimal point in the another group of quantized data is determined by the selected point location; and

inputting the obtained another group of quantized data to the neural network model for processing.

A9. An apparatus for processing data, comprising:

an obtaining unit configured to obtain a group of data to be quantized for a machine learning model;
a determining unit configured to use a plurality of point locations to respectively quantize the group of data to be quantized to determine a plurality of groups of quantized data, wherein each of the plurality of point locations specifies a position of a decimal point in the plurality of groups of quantized data; and
a selecting unit configured to select a point location from the plurality of point locations to quantize the group of data to be quantized based on a difference between each of the plurality of groups of quantized data and the group of data to be quantized.

A10. The apparatus of article A9, where each of the plurality of point locations is represented by an integer, and the apparatus further includes:

a point location obtaining unit configured to obtain one of the plurality of point locations based on a range associated with the group of data to be quantized; and
a point location determining unit configured to determine other point locations of the plurality of point locations based on integers adjacent to the obtained point location.

A11. The apparatus of article A10, where the point location determining unit includes:

an increment unit configured to increment an integer representing the point location to determine one of the other point locations; and
an decrement unit configured to decrement an integer representing the point location to determine one of the other point locations.

A12. The apparatus of any one of articles A9 to 11, where the selecting unit includes:

a difference determining unit configured to determine a plurality of differences between the plurality of groups of quantized data and the group of data to be quantized, respectively;
a difference selecting unit configured to select the smallest difference from the plurality of differences; and
a point location selecting unit configured to select a point location corresponding to the smallest difference from the plurality of point locations.

A13. The apparatus of article A12, where the difference determining unit includes:

a relative difference determining unit used for a given group of quantized data of the plurality of groups of quantized data;
an overall difference determining unit configured to respectively determine a group of relative differences between the given group of quantized data and the group of data to be quantized; and
determining one of the plurality of differences based on the group of relative differences.

A14. The apparatus of article A12, where the difference determining unit includes:

a mean value determining unit configured to determine a quantized mean value of the given group of quantized data and an original mean value of the group of data to be quantized respectively for the given group of quantized data of the plurality of groups of quantized data; and
a mean value difference determining unit configured to determine one of the plurality of differences based on the quantized mean value and the original mean value.

A15. The apparatus of any one of articles A9 to 14, where the group of data to be quantized includes a group of floating-point numbers in a neural network model, and the apparatus further includes:

a quantization unit configured to use the selected point location to quantize the group of data to be quantized to obtain a group of quantized data, wherein quantizing the group of data to be quantized includes: mapping the group of data to be quantized to the group of quantized data based on the selected point location, wherein the position of the decimal point in the group of quantized data is determined by the selected point location; and

an input unit configured to input the obtained group of quantized data to the neural network model for processing.

A16. The apparatus of any one of articles A9 to 14 further includes:

a data obtaining unit configured to obtain another group of data to be quantized including a group of floating-point numbers in a neural network model;
a quantization unit configured to use the selected point location to quantize the another group of data to be quantized to obtain another group of quantized data, wherein quantizing the another group of data to be quantized includes: mapping the another group of data to be quantized to the another group of quantized data based on the selected point location, wherein the position of the decimal point in the another group of quantized data is determined by the selected point location; and
an input unit configured to input the obtained another group of quantized data to the neural network model for processing.

A17. A computer readable storage medium, on which a computer program is stored, and when the program is executed, the method of any one of articles A1 to 8 is implemented.
A18. An artificial intelligence chip, comprising the apparatus for processing data of any one of articles A9 to 16.
A19. Electronic equipment, comprising the artificial intelligence chip of article A18.
A20. A board card, comprising a storage component, an interface device, a control component, and the artificial intelligence chip of article A18, where the artificial intelligence chip is connected to the storage component, the control component, and the interface device, respectively;

the storage component is configured to store data;
the interface device is configured to implement data transfer between the artificial intelligence chip and external equipment; and
the control component is configured to monitor a state of the artificial intelligence chip.

A21. The board card of article A20, where

the storage component includes: a plurality of groups of storage units, wherein each group of storage units is connected to the artificial intelligence chip through a bus, and the storage units are DDR SDRAMs;
the chip includes: a DDR controller configured to control data transfer and data storage of each storage unit; and
the interface device is a standard PCIe interface.

The embodiments of the present disclosure have been described in detail above. Specific examples have been used in the specification to explain the principles and implementations of the present disclosure. The descriptions of the above embodiments are only used to facilitate understanding of the methods and core ideas of the present disclosure. Persons of ordinary skill in the art may change or transform the specific implementation and application scope according to the ideas of the present disclosure. The changes and transformations shall all fall within the protection scope of the present disclosure. In summary, the content of this specification should not be construed as a limitation on the present disclosure.

## Claims

1. A method for processing data, comprising:

obtaining a group of data to be quantized for a machine learning model;
using a plurality of point locations to respectively quantize the group of data to be quantized to determine a plurality of groups of quantized data, wherein each of the plurality of point locations specifies a position of a decimal point in the plurality of groups of quantized data; and
selecting a point location from the plurality of point locations to quantize the group of data to be quantized based on the differences between each of the plurality of groups of quantized data and the group of data to be quantized.

2. The method of claim 1, wherein each of the plurality of point locations is represented by an integer, and the method further includes:

obtaining one of the plurality of point locations based on a range associated with the group of data to be quantized;

and
determining other point locations of the plurality of point locations based on integers adjacent to the obtained point location.

3. The method of claim 2, wherein determining other point locations of the plurality of point locations includes at least any one of the following:

incrementing an integer representing the point location to determine one of the other point locations; and
decrementing an integer representing the point location to determine one of the other point locations.

4. The method of any one of claims 1 to 3, wherein selecting a point location from the plurality of point locations includes:

determining a plurality of differences between the plurality of groups of quantized data and the group of data to be quantized respectively;
selecting the smallest difference from the plurality of differences; and
selecting a point location corresponding to the smallest difference from the plurality of point locations.

5. The method of claim 4, wherein respectively determining the plurality of differences between the plurality of groups of quantized data and the group of data to be quantized includes:

for a given group of quantized data of the plurality of groups of quantized data,
determining a group of relative differences between the given group of quantized data and
the group of data to be quantized, respectively; and
determining one of the plurality of differences based on the group of relative differences.

6. The method of claim 4, wherein respectively determining the plurality of differences between the plurality of groups of quantized data and the group of data to be quantized includes:

for a given group of quantized data of the plurality of groups of quantized data,
determining a quantized mean value of the given group of quantized data and an original
mean value of the group of data to be quantized, respectively; and
determining one of the plurality of differences based on the quantized mean value and the original mean value.

7. The method of any one of claims 1 to 6, wherein the group of data to be quantized includes a group of floating-point numbers in a neural network model, and the method further includes:

using the selected point location to quantize the group of data to be quantized to obtain a group of quantized data, wherein quantizing the group of data to be quantized includes: mapping the group of data to be quantized to the group of quantized data based on the selected point location, wherein the position of the decimal point in the group of quantized data is determined by the selected point location; and
inputting the obtained group of quantized data to the neural network model for processing.

8. The method of any one of claims 1 to 6 further includes:

obtaining another group of data to be quantized including a group of floating-point numbers in a neural network model;
using the selected point location to quantize the another group of data to be quantized to obtain another group of quantized data, wherein quantizing the another group of data to be quantized includes: mapping the another group of data to be quantized to the another group of quantized data based on the selected point location, wherein the position of the decimal point in the another group of quantized data is determined by the selected point location; and
inputting the obtained another group of quantized data to the neural network model for processing.

9. An apparatus for processing data, comprising:

an obtaining unit configured to obtain a group of data to be quantized for a machine learning model;
a determining unit configured to use a plurality of point locations to respectively quantize the group of data to be quantized to determine a plurality of groups of quantized data, wherein each of the plurality of point locations specifies a position of a decimal point in the plurality of groups of quantized data; and
a selecting unit configured to select a point location from the plurality of point locations to quantize the group of data to be quantized based on a difference between each of the plurality of groups of quantized data and the group of data to be quantized.

10. The apparatus of claim 9, wherein each of the plurality of point locations is represented by an integer, and the apparatus further includes:

a point location obtaining unit configured to obtain one of the plurality of point locations based on a range associated with the group of data to be quantized; and
a point location determining unit configured to determine other point locations of the plurality of point locations based on integers adjacent to the obtained point location.

11. The apparatus of claim 10, wherein the point location determining unit includes:

an increment unit configured to increment an integer representing the point location to determine one of the other point locations; and
a decrement unit configured to decrement an integer representing the point location to determine one of the other point locations.

12. The apparatus of any one of claims 9 to 11, wherein the selecting unit includes:

a difference determining unit configured to determine a plurality of differences between the plurality of groups of quantized data and the group of data to be quantized, respectively;
a difference selecting unit configured to select the smallest difference from the plurality of differences; and
a point location selecting unit configured to select a point location corresponding to the smallest difference from the plurality of point locations.

13. The apparatus of claim 12, wherein the difference determining unit includes:

a relative difference determining unit used for a given group of quantized data of the plurality of groups of quantized data;
an overall difference determining unit configured to respectively determine a group of relative differences between the given group of quantized data and the group of data to be quantized; and
determining one of the plurality of differences based on the group of relative differences.

14. The apparatus of claim 12, wherein the difference determining unit includes:

a mean value determining unit configured to determine a quantized mean value of the given group of quantized data and an original mean value of the group of data to be quantized respectively for the given group of quantized data of the plurality of groups of quantized data; and
a mean value difference determining unit configured to determine one of the plurality of differences based on the quantized mean value and the original mean value.

15. The apparatus of any one of claims 9 to 14, wherein the group of data to be quantized includes a group of floating-point numbers in the neural network model, and the apparatus further includes:

a quantization unit configured to use the selected point location to quantize the group of data to be quantized to obtain a group of quantized data, wherein quantizing the group of data to be quantized includes: mapping the group of data to be quantized to the group of quantized data based on the selected point location, wherein the position of the decimal point in the group of quantized data is determined by the selected point location; and
an input unit configured to input the obtained group of quantized data to the neural network model for processing.

16. The apparatus of any one of claims 9 to 14 further includes:

a data obtaining unit configured to obtain another group of data to be quantized including a group of floating-point numbers in a neural network model;
a quantization unit configured to use the selected point location to quantize the another group of data to be quantized to obtain another group of quantized data, wherein quantizing the another group of data to be quantized includes: mapping the another group of data to be quantized to the another group of quantized data based on the selected point location, wherein the position of the decimal point in the another group of quantized data is determined by the selected point location; and

an input unit configured to input the obtained another group of quantized data to the neural network model for processing.

17. A computer readable storage medium, on which a computer program is stored, and when the program is executed, the method of any one of claims 1 to 8 is implemented.

18. An artificial intelligence chip, comprising the apparatus for processing data of any one of claims 9 to 16.

19. Electronic equipment, comprising the artificial intelligence chip of claim 18.

20. A board card, comprising a storage component, an interface device, a control component, and the artificial intelligence chip of claim 18, wherein the artificial intelligence chip is connected to the storage component, the control component, and the interface device, respectively;

the storage component is configured to store data;
the interface device is configured to implement data transfer between the artificial intelligence chip and external equipment; and
the control component is configured to monitor a state of the artificial intelligence chip.

21. The board card of claim 20, wherein

the storage component includes: a plurality of groups of storage units, wherein each group of storage units is connected to the artificial intelligence chip through a bus, and the storage units are DDR SDRAMs;
the chip includes: a DDR controller configured to control data transfer and data storage of each storage unit; and
the interface device is a standard PCIe interface.

FIG.1

**FIG.2**

300

320

Data
quantization

330

Quantized data

340

Neural network
model

350

Output result

310

Input data
(unquantized)

# FIG.3

$400$

Data to be quantized

-|max|                          0.0                          |max|

Quantized data

$-(2^{N-1}-1)$                          0                          $+(2^{N-1}-1)$

410 Data width N

420 Decimal point

| Bit | Bit | ... | Bit | | Bit | ... |

430  Sign bit

432
Integer part

434
Decimal part

**FIG.4**

**FIG.5**

600

610

Obtain a group of data to be quantized for a machine learning model

620

Use a plurality of point locations to respectively quantize the group of data to be quantized to determine a plurality of groups of quantized data, where each of the plurality of point locations specifies a position of a decimal point in the plurality of groups of quantized data

630

Select a point location from the plurality of point locations to quantize the group of data to be quantized based on a difference between each of the plurality of groups of quantized data and the group of data to be quantized

**FIG.6**

700

712 First point
location

710 First
position

First
quantization
solution

| Sig n bit | Bit | Bit | ... | Bit |

● | Bit | ... |

722 Second point
location

720 Second
position

Second
quantization
solution

| Sig n bit | Bit | Bit | ... |

● | Bit | Bit | ... |

**FIG.7**

800 ⟍

810
Obtain a first point location based on a range associated with a group of data to be quantized

820
Obtain a second point location after performing an increment/decrement operation on the first point location

830
Determine a first group of quantized data and a second group of quantized data respectively based on the first point location and the second point location

840
Determine a first difference between the first group of quantized data and the group of data to be quantized and a second difference between the second group of quantized data and the group of data to be quantized respectively

850
Whether the first difference is less than the second difference

Yes 852

No 854

Select the first point location

Select the second point location

860
Perform quantization operations based on the selected point location

**FIG.8**

900

Obtaining unit — 910

Determining unit — 920

Selecting unit — 930

**FIG.9**

**FIG.10**

## INTERNATIONAL SEARCH REPORT

| International application No. |
|---|
| **PCT/CN2020/091578** |

### A. CLASSIFICATION OF SUBJECT MATTER

G06N 3/04(2006.01)i

According to International Patent Classification (IPC) or to both national classification and IPC

### B. FIELDS SEARCHED

Minimum documentation searched (classification system followed by classification symbols)

G06N; G06F; H03M

Documentation searched other than minimum documentation to the extent that such documents are included in the fields searched

Electronic data base consulted during the international search (name of data base and, where practicable, search terms used)

CNKI, IEEE, VEN, CNABS, CNTXT: 量化精度 损失 小数点 缩放 神经网络 卷积网络 机器学习 差异 误差 相似度 距离 压缩 CNN QUANTI+ PRECISION ACCURACY LOSS DECIMAL? RADIX POINT? SCAL+ NEURAL NETWORK CONVOLUTIONAL MACHINE LEARNING ERROR? DIFFERENCE? SIMILARIT??? DISTANCE? COMPRESS+

### C. DOCUMENTS CONSIDERED TO BE RELEVANT

| Category* | Citation of document, with indication, where appropriate, of the relevant passages | Relevant to claim No. |
|---|---|---|
| X | CN 107688855 A (BEIJING DEEPHI INTELLIGENCE TECHNOLOGY CO., LTD.) 13 February 2018 (2018-02-13) description, paragraphs [0046] - [0078], and figures 2-5 | 1-19 |
| Y | CN 107688855 A (BEIJING DEEPHI INTELLIGENCE TECHNOLOGY CO., LTD.) 13 February 2018 (2018-02-13) description, paragraphs [0046] - [0078], and figures 2-5 | 20, 21 |
| Y | CN 109993296 A (CAMBRICON TECHNOLOGIES CO., LTD.) 09 July 2019 (2019-07-09) description, paragraphs [0202]-[0207] | 20, 21 |
| A | CN 109993296 A (CAMBRICON TECHNOLOGIES CO., LTD.) 09 July 2019 (2019-07-09) description, paragraphs [0202]-[0207] | 1-19 |
| A | CN 110059733 A (SUZHOU KEDACOM TECHNOLOGY CO., LTD.) 26 July 2019 (2019-07-26) entire document | 1-21 |
| A | CN 106485316 A (BEIJING BAIDU NETCOM SCIENCE AND TECHNOLOGY CO., LTD.) 08 March 2017 (2017-03-08) entire document | 1-21 |

☑ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 July 2020** | **29 July 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/091578** |

### C.    DOCUMENTS CONSIDERED TO BE RELEVANT

| Category* | Citation of document, with indication, where appropriate, of the relevant passages | Relevant to claim No. |
|---|---|---|
| A | CN 109934331 A (CAMBRICON TECHNOLOGIES CO., LTD.) 25 June 2019 (2019-06-25) entire document | 1-21 |
| A | US 7406451 B2 (BAYER TECHNOLOGY SERVICES GMBH) 29 July 2008 (2008-07-29) entire document | 1-21 |

Form PCT/ISA/210 (second sheet) (January 2015)

**INTERNATIONAL SEARCH REPORT**
Information on patent family members

International application No.

**PCT/CN2020/091578**

| Patent document cited in search report | | | Publication date (day/month/year) | Patent family member(s) | | | Publication date (day/month/year) |
|---|---|---|---|---|---|---|---|
| CN | 107688855 | A | 13 February 2018 | CN | 107657316 | A | 02 February 2018 |
| | | | | CN | 107657316 | B | 07 April 2020 |
| CN | 109993296 | A | 09 July 2019 | None | | | |
| CN | 110059733 | A | 26 July 2019 | None | | | |
| CN | 106485316 | A | 08 March 2017 | CN | 106485316 | B | 02 April 2019 |
| CN | 109934331 | A | 25 June 2019 | EP | 3451164 | A1 | 06 March 2019 |
| | | | | US | 2019122094 | A1 | 25 April 2019 |
| | | | | EP | 3451164 | A4 | 15 January 2020 |
| | | | | WO | 2017185412 | A1 | 02 November 2017 |
| | | | | KR | 20190003613 | A | 09 January 2019 |
| | | | | CN | 107330515 | A | 07 November 2017 |
| US | 7406451 | B2 | 29 July 2008 | EP | 1623371 | A2 | 08 February 2006 |
| | | | | WO | 2004090807 | A2 | 21 October 2004 |
| | | | | WO | 2004090807 | A3 | 22 December 2005 |
| | | | | DE | 10316381 | A1 | 28 October 2004 |
| | | | | US | 2004205037 | A1 | 14 October 2004 |

Form PCT/ISA/210 (patent family annex) (January 2015)